# EUROPEAN PATENT APPLICATION

(11) **EP 4 644 686 A1**
(43) Date of publication of application: **05.11.2025**
(21) Application number: 23909914.6
(22) Date of filing: 30.11.2023
(51) Int. Cl.: F02M 31/125, F02M 29/02, F01N 11/00, F02D 19/06, F02D 19/08

(54) **METHANOL-GASOLINE MIXING ENERGIZING DEVICE, METHANOL-FUELED AUTOMOBILE CONTROL SYSTEM, AND AUTOMOBILE**

(30) Priority: 26.12.2022 CN 202211672137
(71) Applicant: Zhejiang Geely Holding Group Co., Ltd., Hangzhou, Zhejiang 310051 (CN); Zhejiang Liankong Technologies Co., Ltd., Ningbo, Zhejiang 315336 (CN)
(72) Inventor: GE, Feng, Hangzhou, Zhejiang 310051 (CN); YANG, Yang, Hangzhou, Zhejiang 310051 (CN); ZHANG, Lidao, Hangzhou, Zhejiang 310051 (CN); XU, You, Hangzhou, Zhejiang 310051 (CN); SONG, Zhihui, Hangzhou, Zhejiang 310051 (CN); LIU, Yan, Hangzhou, Zhejiang 310051 (CN); ZHAO, Fucheng, Hangzhou, Zhejiang 310051 (CN); WANG, Ruiping, Hangzhou, Zhejiang 310051 (CN)
(74) Representative: Murgitroyd & Company
(86) International application number: PCT/CN2023/135364
(87) International publication number: WO 2024/139984

(57) **Abstract**

A methanol-gasoline mixing energizing device, a methanol-fueled automobile control system, and an automobile. The methanol-gasoline mixing energizing device is mounted in front of a fuel rail, comprises a mixing cavity (1) and a microwave heating device (3), and is used for pre-mixing methanol and gasoline, and the mixed methanol and gasoline fuel flows into the fuel rail and is injected out by a fuel injector.

## Description

### Technical Field

The present invention relates to the technical field of vehicles, and more particularly, to a methanol-gasoline mixing energizing device, a methanol-fueled automobile control system, and an automobile.

### Background Art

The diversification of automotive energy is the only way to reduce the pressure of petroleum energy and improve the safety of petroleum. As a new energy, methanol has the advantages of high octane number, good cleanliness, low cost, regeneration and so on. At present, methanol gasoline for automobiles is mainly based on M15, M85, M100 and other national standards of methanol fuel, which makes automobiles lack of fuel selectivity.

There are many differences between methanol and gasoline in physical and chemical properties, such as air-fuel ratio, polarity, density, saturated vapor pressure, flash point, latent heat of vaporization, corrosion, etc. Therefore, when using different fuels, the physical and chemical differences will inevitably lead to the problem of fuel mixing, which requires the automobiles to redesign a complete fuel system when using methanol as fuel. For example, it is proposed for flexible fuel automobiles to adjust the injection volume of fuel by ECU to achieve full combustion of fuel. By the improvement of various components, it achieves the use of only one fuel system compatible with different proportions of methanol gasoline. However, in this way, the fuel system needs to be redesigned, which is costly. Although the fuel mixture ratio can be adjusted in real-time by the ECU, there is inevitably a problem of information feedback lag, resulting in insufficient cylinder combustion. At present, the main method of M15 and M85 methanol gasoline on the market includes blending the mixed fuel before filling, and adding a large amount of mutual solvent and stabilizer to keep the mixed fuel stable, which not only increases the filling process, but also greatly increases the cost of fuel use.

### Summary of the Invention

The problem to be solved by the present invention is how to solve the problem of uneven mixing of methanol and gasoline due to differences in physical and chemical properties, thus resulting in insufficient combustion of the fuel.

In order to solve the above problems, the present invention provides a methanol-gasoline mixing energizing device including:
a mixing chamber, wherein the mixing chamber has a liquid inlet and a liquid outlet; the liquid inlet is configured for inflowing methanol and gasoline, and the liquid outlet is configured for connection with a fuel rail of a fuel injector; and
a microwave heating device configured for performing microwave heating on the methanol in the mixing chamber.

Preferably, the methanol-gasoline mixing energizing device further includes a stirring device provided in the mixing chamber for stirring the methanol and the gasoline in the mixing chamber.

Preferably, the stirring device includes an electromagnetic stirrer which includes a permanent magnet motor, a rotating shaft and an impeller; the impeller is disposed on the rotating shaft; and the permanent magnet motor is configured for rotating the impeller.

Preferably, the microwave heating device includes a magnetron heater disposed at an outer wall of the mixing chamber.

Preferably, the methanol-gasoline mixing energizing device further includes a sub-chamber and an outlet pipe, wherein the mixing chamber is connected to an end of the outlet pipe, and the other end of the outlet pipe is the liquid outlet; the sub-chamber communicates with the mixing chamber; a control valve is mounted on a pipeline between the sub-chamber and the outlet pipe; and when the control valve is switched on, the methanol and gasoline circulate among the mixing chamber, the sub-chamber and the outlet pipe.

The advantages of the methanol-gasoline mixing energizing device of the present invention over the prior art are as follows.

In the present invention, a methanol-gasoline mixing energizing device is mounted in front of a fuel rail, includes a mixing cavity and a microwave heating device, and is configured for pre-mixing methanol and gasoline, and the mixed methanol and gasoline fuel flows into the fuel rail and is injected out by a fuel injector. According to the present invention, the fuel in the mixing chamber is selectively heated by means of microwave assistance. Only the methanol is heated to avoid heat waste and the heating is uniform and steady, so that the methanol and gasoline are always in a warm blending state, avoiding the re-layering of the blended methanol and gasoline. The present invention provides a basis for sufficient combustion of fuel by premixing methanol and gasoline by a mixing energizer prior to the fuel rail of the fuel injector, with the aid of microwave heating, so that the methanol and gasoline can be uniformly mixed.

The present invention also provides a method for heating the methanol and gasoline together with stirring so that the methanol and gasoline can be uniformly heated, and a method for stirring the methanol and gasoline together with microwave heating so as to avoid re-layering the uniformly stirred mixed fuel. Thus, by the cooperation of the stirring device and the microwave heating device, a mutual promoting action is formed to improve the mutual solubility effect of methanol and gasoline.

The present invention also provides a methanol-fueled automobile control system, including: a controller, a fuel rail and the methanol-gasoline mixing energizing device, wherein the methanol-gasoline mixing energizing device is configured for blending methanol and gasoline; and the fuel rail is configured for supplying the blended methanol and gasoline to an automobile engine; the controller is electrically connected to the microwave heating device and the stirring device of the methanol-gasoline mixing energizing device, respectively; and the controller is configured for controlling operating parameters of the microwave heating device and the stirring device, wherein the operating parameters of the microwave heating device include a heating power and a duration and the operating parameter of the stirring device includes an operating current.

Preferably, the methanol-fueled automobile control system further includes a first temperature sensor configured for detecting a fuel tank temperature, a second temperature sensor configured for detecting a fuel rail temperature, a methanol sensor configured for detecting a methanol concentration in an exhaust gas of the automobile engine, and an oxygen sensor configured for detecting an oxygen concentration in the exhaust gas; the controller is electrically connected to the first temperature sensor, the second temperature sensor, the methanol sensor, and the oxygen sensor, respectively; and the controller is configured for controlling the operating parameters of the stirring device and the microwave heating device according to the fuel tank temperature, the fuel rail temperature, and the methanol concentration and the oxygen concentration in the exhaust gas.

Preferably, the first temperature sensor includes an environment sensor configured for detecting an environment temperature and a fuel tank sensor configured for detecting an initial fuel tank temperature; the controller is electrically connected to the environment sensor and the fuel tank sensor; and the controller is configured for acquiring the fuel tank temperature based on the environment temperature and the initial fuel tank temperature.

Preferably, the methanol-fueled automobile control system further includes a methanol concentration sensor disposed at a liquid outlet of the methanol-gasoline mixing energizing device; the methanol concentration sensor is configured for detecting a methanol concentration at the liquid outlet; the methanol concentration sensor is electrically connected to the controller configured for controlling the fuel rail to supply the blended methanol and gasoline to the automobile engine according to the methanol concentration at the liquid outlet.

The advantages of the methanol-fueled automobile control system of the present invention over the prior art are the same as the advantages of the methanol-gasoline mixing energizing device over the prior art and will not be described in detail herein.

The present invention also provides an automobile, including the methanol-fueled automobile control system.

The advantages of the automobile of the present invention over the prior art are the same as the advantages of the methanol-fueled automobile control system over the prior art and will not be described in detail herein.

### Brief Description of the Drawings

Fig. 1 is a structurally schematic view of a methanol-gasoline mixing energizing device according to an embodiment of the present invention;
Fig. 2 is a schematic cross-sectional view showing another view of a methanol-gasoline mixing energizing device according to an embodiment of the present invention;
Fig. 3 is a curve graph showing the temperature of a solution heated by different heating methods at the same power for a same vessel as a function of heating time; and
Fig. 4 is another structurally schematic view of a methanol-gasoline mixing energizing device according to an embodiment of the present invention.

### Description of Reference Numerals:

1-mixing chamber; 11-liquid inlet; 12-liquid outlet; 2-stirring device; 21-rotating shaft; 22-impeller; 23-permanent magnet rotor; 24-electromagnetic coil; 3-microwave heating device; 4-power interface; 5-sub-chamber; 6-control valve.

### Detailed Description of the Invention

To make the above objects, features and advantages of the present invention more apparent, a detailed description of specific embodiments of the present invention will be made with reference to the accompanying drawings.

There are great differences between methanol and gasoline in polarity, density, saturated vapor pressure, latent heat of vaporization and so on. Because of the high latent heat of vaporization of methanol, low vapor pressure at low temperature and so on, the problem of low-temperature start-up will occur when vehicles use methanol as automobile fuel. At present, the main solution is to solve the problem of cold start-up by using gasoline ignition start-up, switching to methanol combustion after heat engine, or using electric heater heat conduction to preheat the engine or fuel. However, the gasoline preheating method requires the use of dual fuel tanks and two fuel systems, which is cumbersome, costly, and has poor user experience. However, when the electric heater is used for heat conduction, the thermal efficiency is low and there are some safety risks.

In addition, it is found through a large number of experiments that, without stirring at normal temperature, the methanol and gasoline can maintain the stratification state for a long time (over 168 h). After stirring at the room temperature, the methanol and gasoline can also be kept in a state of homogeneous mixing for a long time (over 168 h). When the methanol and gasoline are mixed uniformly, stratification will occur again in case of water or low temperature. For example, the methanol fuel for vehicles required by GB/T 23510-2009 requires that the mass fraction of methanol containing water should not be higher than 0.15%. The methanol gasoline of this standard can keep stable without stratification when the temperature is higher than -15°C, and gradually produce stratification when the temperature is lower than -15°C.

It can be seen therefrom that when the alcohol and gasoline are mixed uniformly, stratification will occur when encountering water or low-temperature conditions. Therefore, in order to avoid such problems as stratification occurring and cold start-up difficulty after the methanol and gasoline are mixed, it is necessary to keep the methanol and gasoline in a warm and uniform state after mixing.

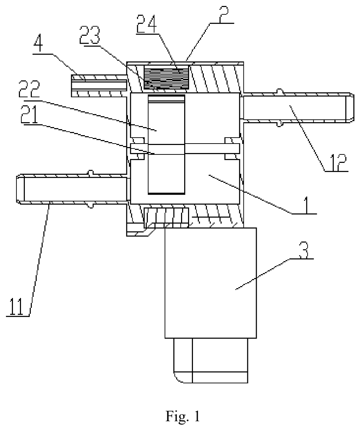

To this end, an embodiment of the present invention provides a methanol-gasoline mixing energizing device (hereinafter may also be referred to as a mixing energizing device) for uniformly mixing methanol and gasoline prior to an injector to maintain a warm uniform state. As shown with reference to Fig. 1, the mixing energizing device includes:

a mixing chamber 1, wherein the mixing chamber 1 has a liquid inlet 11 and a liquid outlet 12; the liquid inlet 11 is configured for inflowing methanol and gasoline, and the liquid outlet 12 is configured for connection with a fuel rail of a fuel injector; and

a microwave heating device 3 configured for performing microwave heating on the methanol in the mixing chamber 1.

Since the methanol and the gasoline have different specific gravities, they are generally immiscible. That is, even if methanol and gasoline are mixed together, they will separate after a period of time. In addition, the homogeneous mixture of methanol and gasoline will also stratify at some low temperatures. Since the vehicle is starting and running, the fuel is required to be transported from the fuel tank to the combustion chamber by a long pipe for combustion. In this process, there are many influencing factors, so that the mixed methanol and gasoline may be stratified again, so that the methanol and gasoline cannot be kept in a stable mixed state, which is not conducive to the full combustion of fuel.

In this embodiment, a methanol-gasoline mixing energizing device is is mounted in front of a fuel rail, includes a mixing cavity and a microwave heating device, and is configured for pre-mixing methanol and gasoline, and the mixed methanol and gasoline fuel flows into the fuel rail and is injected out by a fuel injector. According to the present example, the fuel in the mixing chamber is selectively heated by means of microwave assistance. Only the methanol is heated to avoid heat waste and the microwave heating is uniform and steady, so that the methanol and gasoline are always in a warm blending state, avoiding the re-layering of the blended methanol and gasoline.

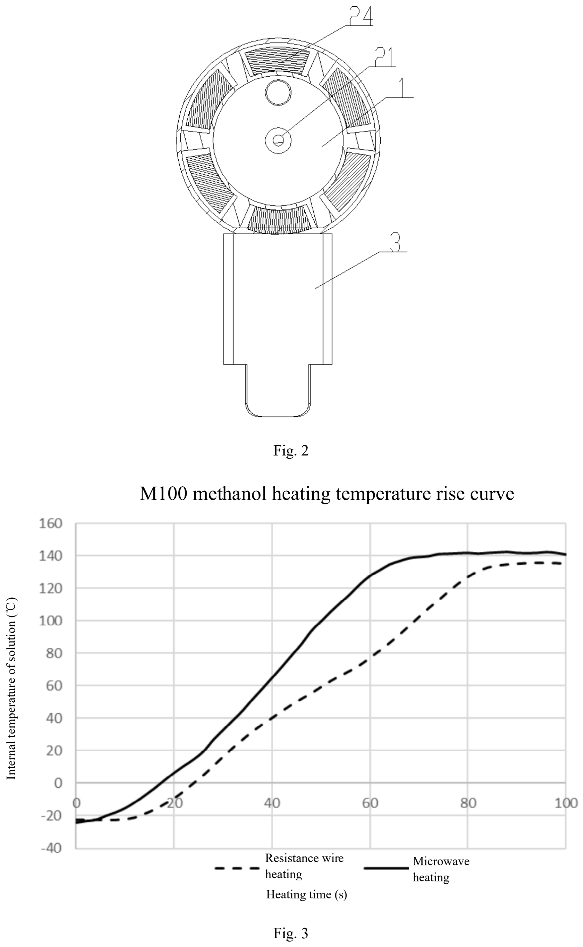

Among them, the microwave has obvious characteristics of short wavelength (1 m-1 mm), high frequency (300 MHZ-300 GHZ) and quantum characteristics. This embodiment adopts microwave heating, which has advantages of uniform heating, fast heating speed, selective heating, timely control and sensitive reaction. The traditional heating method of resistance wire has heat loss due to heating all the fuel, and the resistance wire has hot spots and uneven heating. Compared with traditional resistance wire heating, the microwave heating mainly stimulates polar molecules to move by emitting microwave, and then generates heat by friction. However, the methanol is a polar substance. The microwave heating device 3 of the present embodiment only heats the polar methanol in the mixing chamber 1, so as to avoid waste of heat. In addition, the direct heating of methanol eliminates the heat loss in the heat conduction process. The "internal friction heat" is generated by the high-frequency reciprocating movement of dipolar molecules inside the heated material so as to raise the temperature of the heated material. Without any heat conduction process, the internal and external materials can be heated at the same time, the temperature is raised at the same time, and the heating speed is fast and uniform. The heating purpose can be achieved only by a fraction or a few tenths of the energy consumption of the traditional heating method, with a high energy utilization rate. Fig. 3 is a graph showing the variation of the temperature of a solution heated in the same container at the same power with heating time using both the resistance wire heating and the microwave heating. It can be seen that the microwave heating time is shorter and the energy utilization rate is higher. In addition, the microwave heating can achieve oil-electricity separation, greatly improving the safety and reliability of the heating device. Also, by allowing the fuel itself to generate heat, the heater itself preheating and heat conduction time when the heater is used is reduced, and it is possible to perform power-off, i.e., immediate stop, and the temperature control is more accurate.

In some of these embodiments, the methanol-gasoline mixing energizing device further includes a stirring device provided in the mixing chamber for stirring the methanol and the gasoline in the mixing chamber.

In this embodiment, a mixing energizing device is mounted in front of a fuel rail, and the methanol and the gasoline are premixed in a dual manner of stirring and microwave heating. It should be noted that the stirring and heating in the present embodiment are both for achieving the mutual solubility of methanol and gasoline. It can be understood that if the methanol and gasoline are merely stirred. After the stirring is completed, the methanol and gasoline will be still stratified during pipeline transportation due to the relatively low external environment temperature (-35°C). Therefore, the stirring is only used for mixing the methanol and gasoline at the stirring moment, and it cannot achieve sufficient mutual solubility of the two. This embodiment is combined with stirring and heating to keep the methanol and gasoline above a certain temperature, thereby achieving sufficient mutual solubility of the two on the one hand. On the other hand, even if stratification occurs at a low environment temperature, the degree of stratification is lower than that without heating.

In this embodiment, by the cooperation of the stirring device 2 and the microwave heating device 3, a mutual promoting action is formed to improve the mutual solubility effect of methanol and gasoline. It can be understood that if only the stirring device 2 is used, after the methanol is mixed with gasoline, it is easily affected by the environment to stratify again. If only the microwave heating device 3 is used, on the one hand, only the intermolecular motion is used to realize the heating, and it is difficult to realize the mutual dissolution of methanol and gasoline. On the other hand, in the case of uneven mixing of fuel, the single use of the microwave heating device 3 may cause uneven heating of fuel.

Therefore, in this embodiment, the mixing of methanol and gasoline is achieved by the stirring device 2, and the microwave heating mode is selected to realize the heating of only methanol in combination with the polarity characteristic of methanol, thereby avoiding energy waste. In this embodiment, the methanol and gasoline are heated together with stirring so that the methanol and gasoline can be uniformly heated. The methanol and gasoline are stirred together with microwave heating so as to avoid re-layering the uniformly stirred mixed fuel.

In a preferred embodiment, the microwave heating device 3 includes a magnetron heater disposed at an outer wall of the mixing chamber. The stirring device 2 includes an electromagnetic stirrer. Both the electromagnetic stirrer and the magnetron heater are mature products in the art, and the specific structure thereof will not be described in this embodiment. Illustratively, the electromagnetic stirrer includes a permanent magnet motor, a rotating shaft and an impeller 22. The impeller is disposed on the rotating shaft, and the permanent magnet motor is configured for rotating the impeller 22. As shown in Figs. 1 and 2, the permanent magnet rotor 23 and the electromagnetic coil 24 constitute a permanent magnet motor. The electromagnetic coil 24 serves as a stator. The power interface 4 is configured for connecting 12 V direct current which is converted into three-phase alternating current by a control circuit for supplying power to the permanent magnet electric motor. The electromagnetic coil 24 is energized to generate a magnetic field. A rotating magnetic field synthesized by three-phase symmetrical currents input in the stator winding interacts with the magnetic field generated by the permanent magnet rotor 23 to generate a torque, thereby dragging the rotor to rotate synchronously, and then driving the impeller 22 to rotate so as to uniformly stir methanol and gasoline in the mixing chamber 1.

In this embodiment, the methanol and gasoline in the mixing chamber 1 are mixed more uniformly by electromagnetic stirring. The stirring rate is adjusted by controlling the working current of the electromagnetic stirring, and the methanol and gasoline are more easily dissolved by means of microwave heating.

Since the stirring device 2 is driven by a magnetic force and communicates with the fuel rail of the fuel injector, a certain fuel pressure and good corrosion resistance are required in the inner cavity of the stirring device 2. Therefore, the POM (polyoxymethylene) material is used for the impeller and inner cavity of the electromagnetic stirrer in this embodiment, the POM material has good corrosion resistance, and both ends of the impeller are coated with permanent magnets. Since the bearing and two-end bearing seat have the requirements for hardness and wear resistance, the specially treated martensitic stainless steel 9Cr18 MoV is used and then subjected to vacuum heat treatment. The stirrer and the heater are directly injection molded in one body using POM material, and the shell uses a common martensitic stainless steel material isolate the magnetic field and microwave radiation.

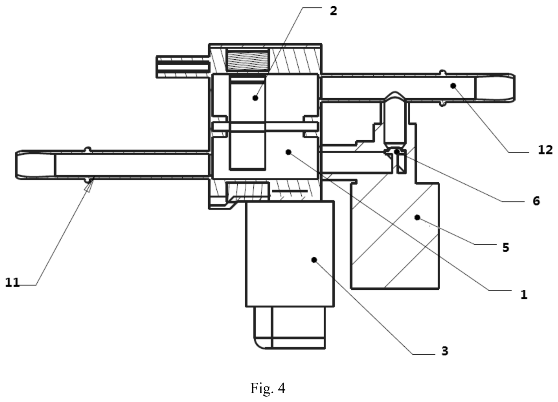

In some of these embodiments, as shown in Fig. 4, the methanol-gasoline mixing energizing device further includes a sub-chamber 5 and an outlet pipe, wherein the mixing chamber 1 is connected to an end of the outlet pipe, and the other end of the outlet pipe is the liquid outlet 12; the sub-chamber 5 communicates with the mixing chamber 1; a control valve 6 is mounted on a pipeline between the sub-chamber 5 and the outlet pipe; and when the control valve 6 is switched on, the methanol and gasoline circulate among the mixing chamber 1, the sub-chamber 5 and the outlet pipe. The control valve 6 is preferably a solenoid valve, and may be a one-way solenoid valve.

In this embodiment, a sub-chamber 5 is provided at a side of the mixing chamber 1, and the mixing chamber 1 and the sub-chamber 5 are in communication via a pipeline. It can be understood that methanol and gasoline enter the mixing chamber via a liquid inlet and are pre-mixed by stirring and heating. Since the sub-chamber communicates with the mixing chamber, the mixed methanol and gasoline will also enter the sub-chamber, and then enter a subsequent fuel rail and fuel injector via a pump via a liquid outlet. If the mixing temperature of methanol and gasoline is uneven in the mixing chamber, a control valve can be switched on, so that methanol and gasoline form a cycle between the mixing chamber 1, the sub-chamber 5 and an outlet pipe. It can be understood that at this time, the liquid outlet is in a closed state. Therefore, after the control valve is switched on, the oil in the sub-chamber enters the outlet pipe and then returns to the mixing chamber for re-mixing, thereby further increasing the mixing uniformity of methanol and gasoline by the circulation flow of methanol and gasoline. It should be noted that the unevenness of the mixture temperature of methanol and gasoline in the mixing chamber is mainly determined according to the feedback of subsequent detection data.

Embodiments of the present invention also provide a methanol-fueled automobile control system including a controller, a fuel rail and a methanol-gasoline mixing energizing device. It should be understood that the controller further includes an oil tank for storing methanol and gasoline, wherein the methanol and gasoline are stored in the oil tank in a certain proportion according to actual needs. The oil pump is configured for delivering the methanol and the gasoline to the methanol-gasoline mixing energizing device which is configured for mixing the methanol and the gasoline. The fuel rail is configured for supplying the mixed methanol and gasoline to an automobile engine. The controller is electrically connected to the microwave heating device 3 and the stirring device 2 of the methanol-gasoline mixing energizing device, respectively. The controller may be an ECU controller of the automobile. The controller is configured for controlling the operating parameters of the microwave heating device and the stirring device, wherein the operating parameters of the microwave heating device include a heating power and a duration, and the operating parameters of the stirring device include an operating current. In some embodiments, the controller is further configured for controlling the switching on and off of the control valve.

Since methanol and gasoline are stored in a fuel tank in a certain proportion, the fuel ratio will affect the quantity of oil injected by the subsequent fuel injector. For example, when pure gasoline is stored in the fuel tank, the quantity of oil injected by the subsequent fuel injection is lower than that in the fuel tank containing a certain proportion of methanol. It can be understood that the quantity of oil injected by the subsequent fuel injection tends to increase as the content of methanol is higher. Therefore, it is necessary to detect the concentration of methanol in the mixed fuel after mixing methanol and gasoline, so as to adjust the parameters such as fuel injection pulse width of the fuel injector accordingly. Therefore, in some embodiments, the methanol-fueled automobile control system further includes a methanol concentration sensor which is provided at the liquid outlet 12 of the methanol-gasoline mixing energizing device and is configured for detecting the concentration of methanol at the liquid outlet 12. The methanol concentration sensor is electrically connected to the controller. After obtaining the data detected by the methanol concentration sensor, the controller controls parameters such as the fuel injection amount of the fuel injector, or controls the switching on and off size of the control valve.

In some of these embodiments, the methanol-fueled automobile control system further includes a first temperature sensor configured for detecting a fuel tank temperature and a second temperature sensor configured for detecting a fuel rail temperature. The controller is electrically connected to the first temperature sensor and the second temperature sensor, respectively. By detecting the rail temperature, it is determined whether the mixing chamber 1 heats the fuel in the chamber to a desired temperature. By detecting the fuel tank temperature, an initial temperature of the methanol and gasoline is obtained, so that the heating time of the fuel in the mixing chamber 1 can be controlled according to the initial temperature and the required heating temperature. In the present embodiment, the methanol-fueled automobile control system further includes a preset unit in which the heating time required for heating to a desired temperature from different initial temperatures with different fuel ratios is stored. As shown in Table 1, it shows the time taken to heat 300 ml of fuel to 40°C using a 800 W microwave heater at different concentrations at different initial temperatures. For example, when methanol accounts for 100% in the M100 fuel and the initial temperature is 15°C, 300 ml of fuel is heated to 40°C using the 800 W microwave heater for 23s.

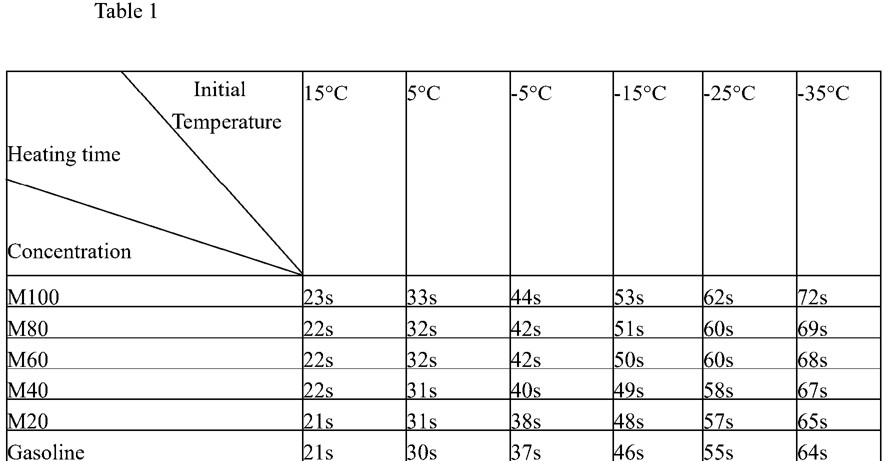

In some of these embodiments, the methanol-fueled automobile control system further includes a methanol sensor configured for detecting a methanol concentration in an exhaust gas of the automobile engine and an oxygen sensor configured for detecting an oxygen concentration in the exhaust gas. The methanol sensor and the oxygen sensor are electrically connected to the controller. By detecting the concentration of methanol and oxygen in the exhaust gas, so as to know the combustion condition of the fuel, relevant parameters of the mixing energizing device and the fuel injector, etc. are adjusted according to the combustion condition to achieve full combustion of the fuel. For example, by detecting the concentration of methanol and oxygen in the exhaust gas, it is found that the concentration of methanol in the exhaust gas is high, indicating that the combustion of the fuel is insufficient, which may be related to the uneven mixing of the fuel or the quantity of fuel injected, so that it is necessary to increase the mixing force of methanol and gasoline or adjust the quantity of fuel injected. The mixing of methanol and gasoline can be adjusted by switching on the control valve so that the methanol and gasoline circulate between the mixing chamber and the sub-chamber to achieve sufficient mixing.

In some of these embodiments, the first temperature sensor includes an environment sensor configured for detecting an environment temperature and a fuel tank sensor configured for detecting an initial fuel tank temperature; the controller is electrically connected to the environment sensor and the fuel tank sensor; and the controller is configured for acquiring the fuel tank temperature based on the environment temperature and the initial fuel tank temperature. By adding the environment temperature as comparison, for example, if the absolute value of the difference between the initial temperature of the oil tank and the environment temperature is within the preset range, it is considered that the initial temperature of the oil tank is correct, otherwise, the sensor in the oil tank may be faulty, etc. Thus, it is possible to avoid false detection due to the failure of the temperature sensor of the fuel tank, resulting in subsequent inaccuracy in adjusting the microwave heating time according to the initial temperature of the fuel, affecting the mutual solubility between methanol and gasoline, and thus affecting the full combustion of the fuel.

It should be noted that the methanol-fueled automobile control system of the present embodiment has a comparison table such as shown in Table 1 stored therein in advance. The controller compares the data detected by each sensor with the comparison table, and performs corresponding control and adjustment according to the comparison table. For example, after acquiring the ratio of methanol and gasoline in the fuel tank and the temperature of the fuel tank detected by the first sensor, a corresponding heating time is selected according to the comparison table, and the microwave heating device is controlled to heat the methanol in the mixing chamber for the selected time. It can be understood that the comparison table includes the time consumed when different methanol concentrations are used to heat 300 ml of fuel to 40°C at different temperatures using a microwave heater of 800 W as shown in Table 1. It may further include a comparison table regarding the time consumed when different methanol concentrations are used to heat different contents of fuel to a set temperature at different temperatures using a microwave heater of different power, may further include the comparison table regarding different methanol concentrations at the outlet of the mixing energizer and the injection pulse width of the injector, and may further include a comparison table among the methanol concentration in the exhaust gas, the oxygen concentration in the exhaust gas and the fuel injection pulse width of the fuel injector and the operating parameters of the mixing energizing device, etc.

Embodiments of the present invention also provide a vehicle including the aforementioned methanol-fueled automobile control system.

Although the present disclosure has been described above, the scope of protection of the present disclosure is not limited thereto. Various changes and modifications may be effected by one skilled in the art without departing from the spirit and scope of the disclosure, and it is intended that such changes and modifications fall within the scope of the appended claims.

## Claims

1. A methanol-gasoline mixing energizing device, comprising:
a mixing chamber (1), wherein the mixing chamber (1) has a liquid inlet (11) and a liquid outlet (12); the liquid inlet (11) is configured for inflowing methanol and gasoline, and the liquid outlet (12) is configured for connection with a fuel rail of a fuel injector; and
a microwave heating device (3) configured for performing microwave heating on the methanol in the mixing chamber (1).

2. The methanol-gasoline mixing energizing device according to claim 1, wherein the methanol-gasoline mixing energizing device further comprises a stirring device (2) provided in the mixing chamber (1) for stirring the methanol and the gasoline in the mixing chamber (1).

3. The methanol-gasoline mixing energizing device according to claim 2, wherein the stirring device (2) comprises an electromagnetic stirrer which comprises a permanent magnet motor, a rotating shaft (21) and an impeller (22); the impeller (22) is disposed on the rotating shaft (21); and the permanent magnet motor is configured for rotating the impeller (22).

4. The methanol-gasoline mixing energizing device according to claim 1, wherein the microwave heating device (3) comprises a magnetron heater disposed at an outer wall of the mixing chamber.

5. The methanol-gasoline mixing energizing device according to claim 1, wherein the methanol-gasoline mixing energizing device further comprises a sub-chamber (5) and an outlet pipe, wherein the mixing chamber (1) is connected to an end of the outlet pipe, and the other end of the outlet pipe is the liquid outlet (12); the sub-chamber (5) communicates with the mixing chamber (1); a control valve (6) is mounted on a pipeline between the sub-chamber (5) and the outlet pipe; and when the control valve (6) is switched on, the methanol and gasoline circulate among the mixing chamber (1), the sub-chamber (5) and the outlet pipe.

6. A methanol-fueled automobile control system, comprising: a controller, a fuel rail and the methanol-gasoline mixing energizing device according to any one of claims 2-5, wherein the methanol-gasoline mixing energizing device is configured for blending methanol and gasoline; and the fuel rail is configured for supplying the blended methanol and gasoline to an automobile engine; the controller is electrically connected to the microwave heating device (3) and the stirring device (2) of the methanol-gasoline mixing energizing device, respectively; and the controller is configured for controlling operating parameters of the microwave heating device (3) and the stirring device (2), wherein the operating parameters of the microwave heating device (3) comprise a heating power and a duration and the operating parameter of the stirring device (2) comprises an operating current.

7. The methanol-fueled automobile control system according to claim 6, wherein the methanol-fueled automobile control system further comprises a first temperature sensor configured for detecting a fuel tank temperature, a second temperature sensor configured for detecting a fuel rail temperature, a methanol sensor configured for detecting a methanol concentration in an exhaust gas of the automobile engine, and an oxygen sensor configured for detecting an oxygen concentration in the exhaust gas; the controller is electrically connected to the first temperature sensor, the second temperature sensor, the methanol sensor, and the oxygen sensor, respectively; and the controller is configured for controlling the operating parameters of the stirring device (2) and the microwave heating device (3) according to the fuel tank temperature, the fuel rail temperature, and the methanol concentration and the oxygen concentration in the exhaust gas.

8. The methanol-fueled automobile control system according to claim 7, wherein the first temperature sensor comprises an environment sensor configured for detecting an environment temperature and a fuel tank sensor configured for detecting an initial fuel tank temperature; the controller is electrically connected to the environment sensor and the fuel tank sensor; and the controller is configured for acquiring the fuel tank temperature based on the environment temperature and the initial fuel tank temperature.

9. The methanol-fueled automobile control system according to claim 6, wherein the methanol-fueled automobile control system further comprises a methanol concentration sensor disposed at a liquid outlet (12) of the methanol-gasoline mixing energizing device; the methanol concentration sensor is configured for detecting a methanol concentration at the liquid outlet (12); the methanol concentration sensor is electrically connected to the controller configured for controlling the fuel rail to supply the blended methanol and gasoline to the automobile engine according to the methanol concentration at the liquid outlet (12).

10. An automobile, comprising the methanol-fueled automobile control system according to any one of claims 6-9.
